# FASCICULE DE BREVET EUROPEEN

(11) **EP 3 345 475 B1**
(45) Date de publication et mention de la délivrance du brevet: **11.10.2023**
(21) Numéro de dépôt: 18305003.8
(22) Date de dépôt: 04.01.2018
(51) Int. Cl.: A01K 5/00

(54) **MÉLANGEUSE AVEC UN DISPOSITIF DE DÉCHARGEMENT LATÉRAL**
MISCHBEHÄLTER MIT SEITENENTLADEVORRICHTUNG
MIXING WAGON WITH LATERAL UNLOADING DEVICE

(30) Priorité: 05.01.2017 FR 1750089
(43) Date de publication de la demande: 11.07.2018
(73) Titulaire: Kuhn-Audureau SAS, 85260 La Copechagnière (FR)
(72) Inventeur: SORIN, Benoît, 44116 Vieillevigne (FR); MIGNON, Florent, 85250 Saint-Andre-Goule-d'Oie (FR)
(74) Mandataire: Cabinet Nuss

(56) Documents cités:
- EP-A1- 1 084 612
- EP-A2- 2 189 058
- US-A1- 2008 105 520

## Description

La présente invention concerne le domaine du machinisme agricole, plus particulièrement les équipements pour la distribution de produits d'alimentation animale, en particulier de mélanges à base de nourriture ensilée ou autre, dans les étables ou analogues.

Dans ce contexte, l'invention porte plus spécifiquement sur une mélangeuse, automotrice ou destinée à être attelée, pourvue d'un dispositif de déchargement latéral.

Ce type de machine de distribution de nourriture aux animaux (souvent des mélanges de différents aliments, fourrages et additifs formant une ration) doit pouvoir s'adapter aux équipements et installations variés des étables ou bâtiments similaires, et notamment aux différentes configurations de table d'alimentation (tous les bâtiments au sein d'une ferme ont rarement la même configuration ou les mêmes dimensions).

Avec une ouverture de décharge généralement centrée par rapport à la cuve, il est nécessaire de prévoir un dispositif de décharge qui transporte le produit mélangé latéralement vers la table d'alimentation, pendant que la mélangeuse se déplace ou non pour distribuer les produits mélangés.

Un tel dispositif de décharge doit pouvoir distribuer le produit mélangé :
- dans une position horizontale et avec une configuration rectiligne sans déport (correspond aussi à la position transport) pour un déchargement à plat ;
- dans une position horizontale déportée et avec une configuration rectiligne ;
- dans une position déportée et avec une configuration inclinée pour atteindre les auges surélevées.

Le document US 2008/0105520 divulgue déjà une mélangeuse du type précité.

Cette mélangeuse comprend une cuve de mélange avec une ouverture de déchargement, avantageusement frontale et préférentiellement sensiblement centrée par rapport à la direction d'avance, et un dispositif de déchargement qui est associé à l'ouverture de décharge et qui est apte et destiné à transporter le produit mélangé sortant de l'ouverture de déchargement et à le déposer au niveau d'une table d'alimentation située sur un côté latéral de ladite mélangeuse. Ce dispositif de déchargement comprend un convoyeur à bande transporteuse arrangé transversalement par rapport à la direction d'avance de la mélangeuse et s'étendant au moins sous l'ouverture de déchargement sur toute la largeur de cette dernière. De plus, le convoyeur de cette mélangeuse connue est mobile transversalement à la direction d'avance et constitué de deux parties, dans le sens de son extension longitudinale, à savoir une première partie de plus grande longueur et une seconde partie de plus faible longueur, cette dernière étant reliée à la première partie par une liaison pivot et étant mobile entre plusieurs positions inclinées par rapport à ladite première partie.

Dans cette réalisation connue, le mouvement automatique d'inclinaison de la seconde partie est asservi au mouvement de translation latérale du convoyeur, définissant ainsi un nombre limité de positions inclinées : à une position en translation correspondant une position inclinée par l'intermédiaire d'un mécanisme à came.

En outre, dans la mélangeuse de ce document US précité, la partie inclinée ne peut pas prendre une position horizontale pour former un convoyeur rectiligne. Certains types d'installations ne peuvent donc être alimentés avec cette mélangeuse, en particulier les étables ou enceintes présentant des barrières ou des barres de confinement à hauteur de garrot.

Par le document EP 2 189 058, on connaît par ailleurs une mélangeuse avec un dispositif de décharge qui est apte à distribuer le produit mélangé, au choix de l'utilisateur, sélectivement sur le côté droit ou sur le côté gauche.

Dans cette réalisation connue, chacune des deux parties du convoyeur à bande transporteuse peut être inclinée indépendamment, les deux parties sont de même longueur, et cette longueur doit être supérieure à la largeur de l'ouverture de déchargement (pour récupérer la totalité du produit déchargé par l'ouverture lorsque l'autre partie est inclinée).

Ainsi, la largeur totale de la mélangeuse est donnée par la longueur totale de la bande transporteuse (addition des longueurs des deux parties), ce qui est souvent un inconvénient pour l'accès dans des bâtiments étroits.

De plus, il en résulte une construction complexe (cadre en trois parties, actionneurs multiples) et coûteuse, dont les possibilités ne sont généralement exploitées que partiellement par les utilisateurs.

En effet, l'exploitant équipé de cette solution sophistiquée et flexible ne la met en oeuvre, la plupart du temps, que pour distribuer le produit mélangé d'un seul côté, droite ou gauche.

**Par le document** US 2008/105520**, on connaît une mélangeuse présentant les caractéristiques du préambule de la revendication 1.**

Le but de l'invention est de proposer une solution permettant de surmonter les principales limitations des constructions connues présentées ci-dessus, c'est-à-dire notamment fournir une solution à la fois relativement flexible d'utilisation et adaptée aux pratiques les plus courantes des utilisateurs, mais également d'un prix de revient limité et qui est compacte transversalement, pour pouvoir accéder à des bâtiments étroits, sans modifier la contenance de la cuve.

A cet effet, l'invention a pour objet une mélangeuse du type évoqué précédemment et qui présente les caractéristiques de la revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
les figures 1 à 3 sont des vues respectivement en perspective, en élévation latérale et de dessus d'une mélangeuse selon l'invention (du type à atteler), le convoyeur n'étant pas déporté et la seconde partie du convoyeur étant coplanaire avec la première partie (configuration rectiligne horizontale) ;
la figure 4 est une vue en élévation frontale de la mélangeuse représentée sur les figures 1 à 3, le timon étant enlevé et le dispositif de déchargement étant en configuration rectiligne (première et seconde parties du convoyeur en position horizontale et coplanaire - position centrée de transport du convoyeur) ;
la figure 5 est une vue similaire à celle de la figure 1, la seconde partie du convoyeur étant positionnée de manière inclinée vers le haut ;
la figure 6 est une vue similaire à celle de la figure 4 de l'objet représenté figure 5 ;

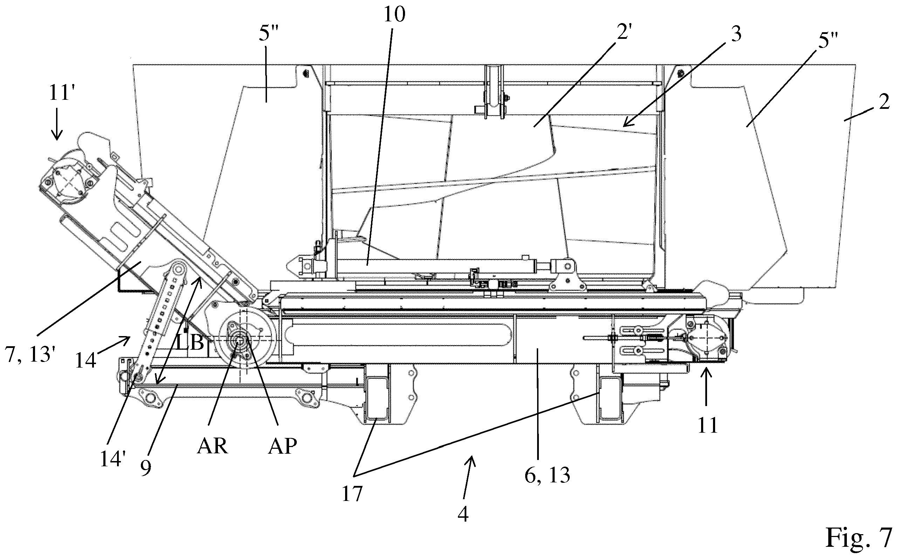

la figure 7 est une vue en élévation du dispositif de déchargement seul, dans sa configuration des figures 5 et 6, et
les figures 8 et 9 sont des vues similaires à celle de la figure 4, le convoyeur étant déporté latéralement, respectivement à gauche (à droite vu dans la direction d'avance A) et à droite (à gauche vu dans la direction d'avance).

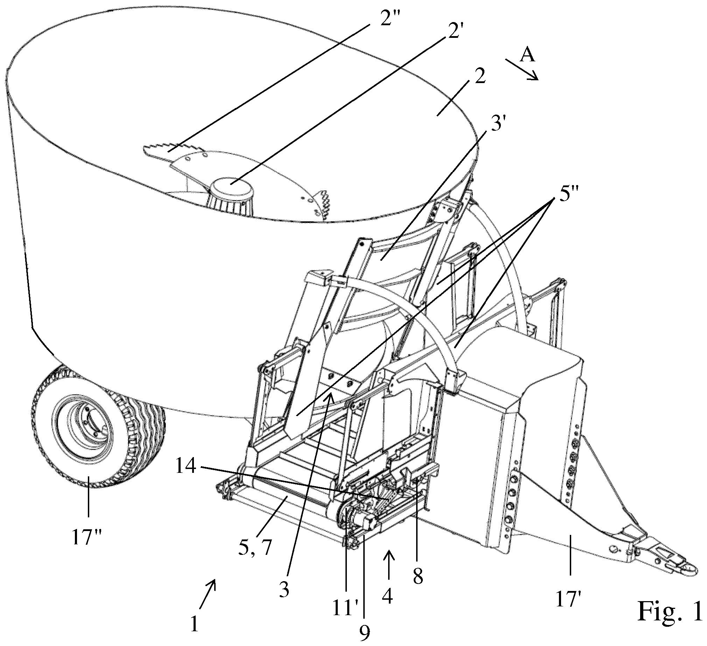

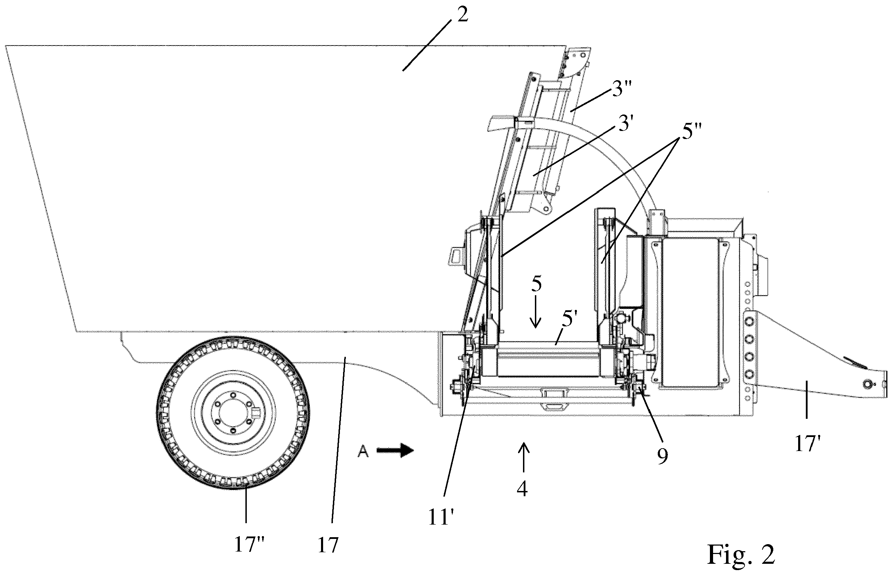

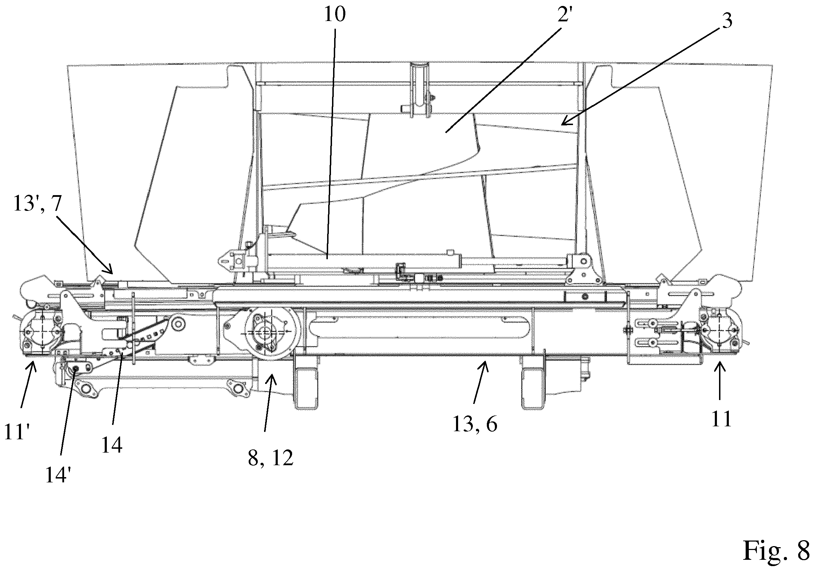

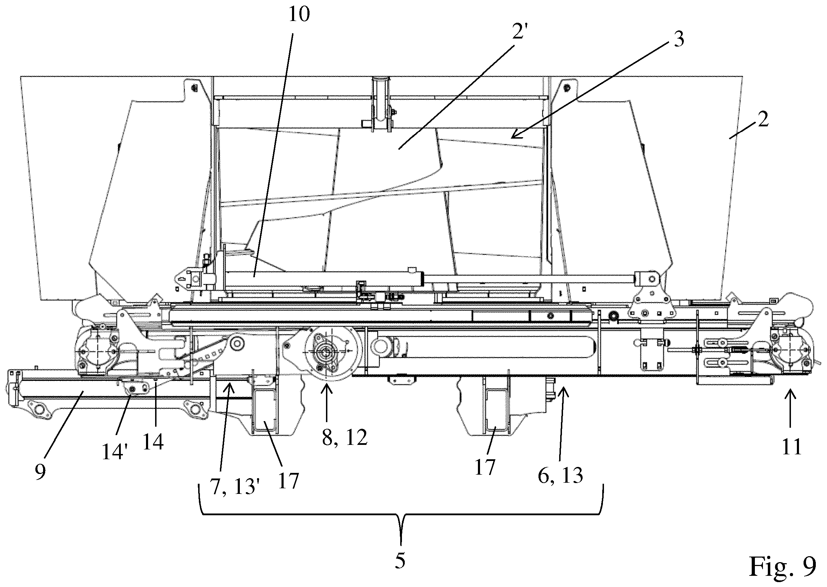

Les figures 1 à 6, 8 et 9 montrent une mélangeuse 1, destinée à être attelée à un véhicule tracteur (non représenté). Une telle mélangeuse est une machine qui permet de mélanger et de distribuer des produits pour l'alimentation d'animaux. Cette mélangeuse 1 comprend une cuve de mélange 2 avec une ouverture de déchargement 3, avantageusement frontale et préférentiellement sensiblement centrée par rapport à la direction d'avance, et un dispositif 4 de déchargement qui est associé à l'ouverture de décharge 3 et qui est apte et destiné à transporter le produit mélangé sortant de l'ouverture de déchargement 3 et à le déposer au niveau d'une table d'alimentation 16 située sur un côté latéral de ladite mélangeuse 1. La cuve de mélange 2 est portée par un châssis roulant 17 muni d'un timon 17' et repose sur le sol par l'intermédiaire de roues 17" qui permettent de déplacer la machine 1.

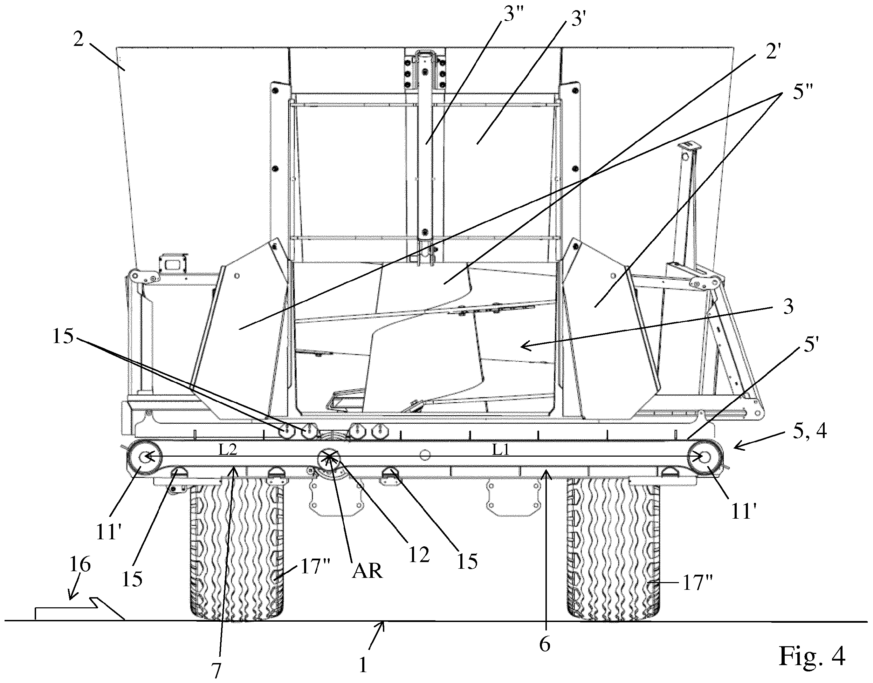

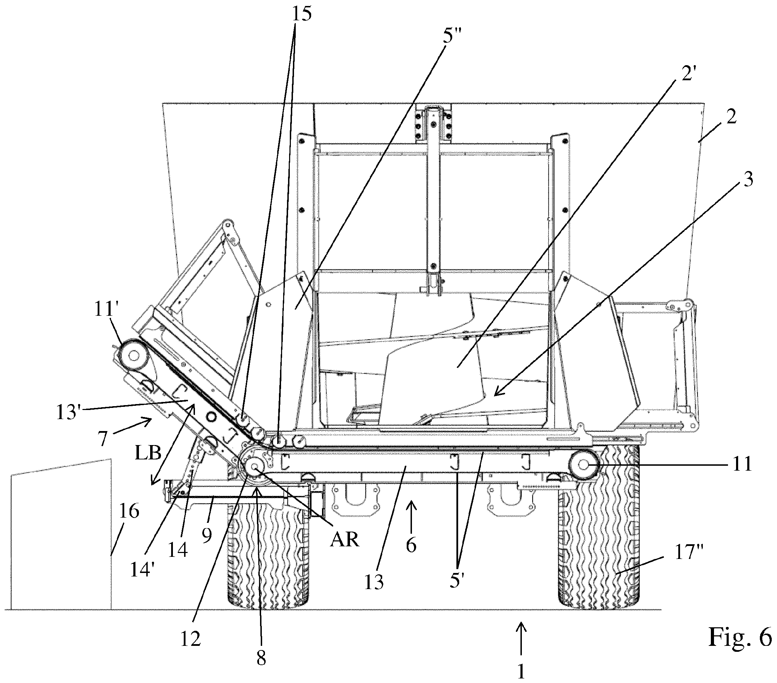

Comme le montrent les figures 4 et 6, la table d'alimentation 16, par exemple sous forme d'auge, peut soit être située sensiblement au niveau de la surface de roulement de la mélangeuse 1 (figure 4), soit être décalée en hauteur par rapport à cette surface (figure 6).

Selon une alternative de réalisation non représentée, la mélangeuse 1 peut être une machine automotrice qui comporte un châssis muni de roues motrices à l'arrière et de roues directrices à l'avant. Une telle mélangeuse automotrice dispose d'une cabine de pilotage et une unité d'entraînement avec un moteur. Dans une autre alternative encore, également non représentée, la mélangeuse 1 peut être une machine autonome, à fonctionnement automatique.

Ce dispositif de déchargement 4 comprend un convoyeur 5 à bande transporteuse 5' arrangé transversalement par rapport à la direction d'avance A de la mélangeuse 1 et s'étendant au moins sous l'ouverture de déchargement 3 sur toute la largeur de cette dernière.

Le convoyeur 5 est mobile transversalement à la direction d'avance A et est constitué de deux parties 6 et 7, dans le sens de son extension longitudinale, à savoir une première partie 6 de plus grande longueur et une seconde partie 7 de plus faible longueur, cette dernière étant reliée à la première partie 6 par une liaison pivot 8 et étant mobile entre plusieurs positions inclinées par rapport à ladite première partie 6.

La mélangeuse 1 comporte des moyens qui assurent l'animation des organes de travail, par exemple une ou plusieurs arbres rotatifs, entrainées avantageusement par la prise de force du tracteur (non représenté) auquel elle est attachée dans la variante représentée. En variante, ces moyens d'animation ou d'actionnement peuvent consister en des moteurs hydrauliques ou électriques, alimentés par une source embarquée sur la machine 1 ou présente sur le tracteur. La cuve 2, de forme sensiblement cylindrique (par exemple, à section rectangulaire, elliptique ou circulaire), est généralement équipée d'un arbre rotatif vertical 2' entrainant des couteaux 2" destinés à désagglomérer et à mélanger les divers produits chargés dans la cuve 2, puis à favoriser leur évacuation à travers l'ouverture de déchargement 3. Cette dernière, qui peut par exemple être obturée par un volet ou une porte coulissante 3', éventuellement déplacé(s) par un actionneur 3", se situe typiquement au niveau de la base inférieure de la cuve 2, sur le côté frontal ou arrière de cette dernière et en étant centrée par rapport à l'axe longitudinal de la mélangeuse 1 (parallèle à la direction d'avance A). Cette ouverture 3 présente généralement une largeur importante (par exemple jusqu'à la moitié de la largeur de la cuve 2) et une forme sensiblement rectangulaire.

Selon un exemple de réalisation non représenté sur les figures, l'ouverture de déchargement peut être disposée décentrée par rapport à la direction d'avance A et à l'axe longitudinal médian de la machine 1 et de la cuve 2. Ainsi, il peut être avantageux, avec une distribution de produit mélangé sur le côté droit, de décentrer l'ouverture de déchargement sur le côté droit.

En outre, le convoyeur 5 est avantageusement monté sur des glissières transversales autorisant son déplacement en translation perpendiculairement à l'axe longitudinal de la mélangeuse 1.

De part et d'autre du convoyeur 5, le long de ses cotés longitudinaux, sont avantageusement montées des parois de confinement 5" (par exemple en tôle, en matière plastique ou en toile) évitant la chute des produits déversés à travers l'ouverture 3, dudit convoyeur 5.

Ces parois 5" sont avantageusement constituées de plusieurs parties (fixes et mobiles) articulées entre elles pour accompagner les mouvements des deux parties constitutives 6 et 7 dudit convoyeur 5, et peuvent être associées à des éléments de tringlerie (voir figures 1, 4, 5 et 6).

Conformément à l'invention, la liaison pivot 8 et l'arrangement entre les deux parties constitutives 6 et 7 sont configurées de telle manière que, dans sa position basse de pivotement, la seconde partie 7 est coplanaire avec la première partie 6 et la machine 1 comprend des premiers moyens 9, 14 de déplacement en pivotement de la seconde partie 7 et des seconds moyens 10 de déplacement en coulissement transversal du convoyeur 5, les premiers et seconds moyens 9, 14 ; 10 étant mutuellement distincts.

Grâce à ces dispositions, l'invention permet de fournir une mélangeuse 1 avec un dispositif de déchargement compact, à structure relativement simple, flexible en termes d'utilisation et adapté au plus juste aux besoins des utilisateurs.

Chacun des deux types de moyens d'actionnement 9, 14 ; 10 peut comporter son propre organe actif ou actionneur.

Toutefois, il peut également être prévu que le même organe ou actionneur réalise les deux déplacements (en translation du convoyeur 5 / en pivotement de la seconde partie 7), directement et séparément ou de manière indirecte et liée, par exemple par un mécanisme cinématique de transmission de mouvement.

En accord avec une première variante de réalisation, les moyens 9, 14 de déplacement en pivotement de la seconde partie 7 sont commandés indépendamment des moyens 10 de déplacement en coulissement transversal du convoyeur 5.

En accord avec une seconde variante de réalisation, les moyens 9, 14 de déplacement en pivotement, de manière continue, de la seconde partie 7 et les moyens 10 de déplacement en coulissement du convoyeur 5 sont commandés de manière au moins partiellement interdépendante, en particulier avec une commande conditionnelle ou subordonnée des moyens 9, 14 de déplacement en pivotement.

Dans toutes les variantes de réalisation précitées, la seconde partie 7 pourra prendre n'importe quelle position inclinée, entre la position horizontale et sa position d'inclinaison maximale vers le haut.

Selon une caractéristique importante de l'invention, la longueur totale L du convoyeur 5 est inférieure à la largeur 1 de la cuve de mélange 2, notamment inférieure à la dimension transversale la plus importante de ladite cuve 2. Ce n'est donc pas le dispositif de déchargement 4 qui détermine la largeur de passage minimale nécessaire pour la mélangeuse 1.

Afin de pouvoir également récupérer la totalité du produit déversé à travers l'ouverture de déchargement 3 dans la configuration de déchargement en hauteur, c'est-à-dire avec la seconde partie en position inclinée, il est avantageusement prévu par l'invention que la longueur L1 de la première partie longitudinale 6 du convoyeur 5 est au moins égale, préférentiellement au moins légèrement supérieure, à la largeur L0 de l'ouverture de déchargement 3 de la cuve 2.

D'autre part, pour limiter l'extension longitudinale du convoyeur 5, la longueur L2 de la seconde partie longitudinale 7 du convoyeur 5 est inférieure à la largeur L0 de l'ouverture de déchargement 3 de la cuve 2. La seconde partie longitudinale 7 s'étend au moins partiellement sous l'ouverture de déchargement 3 dans sa configuration rectiligne (c'est-à-dire non inclinée par rapport à la première partie 6, ou horizontale) et sans déport.

Enfin, en vue de permettre un déversement suffisamment déporté latéralement des deux côtés de la mélangeuse 1, il est en outre préférentiellement prévu que la longueur totale L du convoyeur 5 est supérieure à la distance D entre chacun des bords latéraux de l'ouverture de déchargement 3 et le coté latéral extérieur opposé de la cuve 2.

Préférentiellement, la configuration inclinée de la seconde partie longitudinale 7 ne peut être atteinte qu'après un déport du convoyeur 5 au moins suffisant pour que l'axe AP de la liaison pivot 8 se trouve en dehors de l'encombrement de la cuve 2.

En accord avec une construction simple et représentée aux dessins annexés, mais néanmoins suffisante pour autoriser un déchargement efficace dans les différentes conditions rencontrées par les utilisateurs, le convoyeur 5 comprend avantageusement trois rouleaux 11, 11', 12 pour le support et la circulation guidée de sa bande transporteuse 5', à savoir deux rouleaux d'extrémité 11 et 11', dont au moins l'un est entrainé ou motorisé, et un rouleau intermédiaire 12, tendeur et de renvoi, situé au niveau de la liaison pivot 8 et en appui sous pression sur la portion inférieure de retour de ladite bande transporteuse 5'.

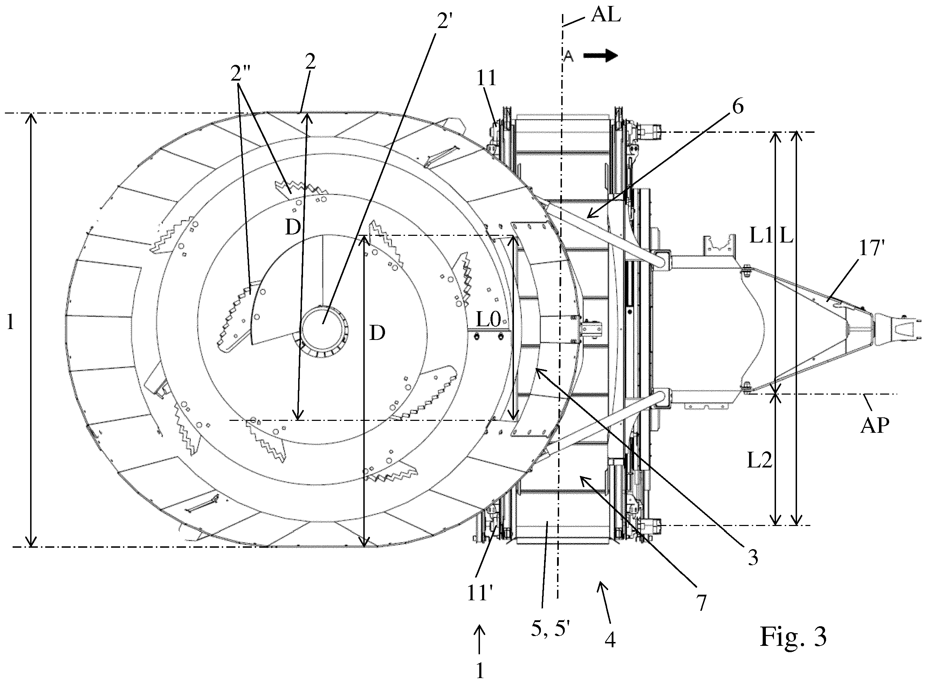

La bande transporteuse 5' peut circuler dans les deux sens en étant entraîné par l'un des rouleaux d'extrémité 11, 11' de manière à déverser le produit mélangé, en configuration rectiligne horizontale du convoyeur 5, sur le côté droit ou le côté gauche de la mélangeuse 1 (voir figure 3 ou 4).

Tel qu'indiqué précédemment, le convoyeur 5 est également configuré pour être déporté latéralement de l'un ou l'autre des côtés de la mélangeuse 1. Plus précisément dans le cas de la mélangeuse 1 représentée, le produit mélangé pourra être distribué sur le côté droit en configuration rectiligne avec déport lorsque l'extrémité 14' de la biellette 14 est en butée en fin de glissière 9 sous l'action du moyen 10 qui va translater le convoyeur 5 à droite. D'autre part, le moyen 10 pourra déplacer le convoyeur 5 à gauche en configuration rectiligne. La position maximale de déport à gauche est limitée par le convoyeur 5 lui-même puisque sa position latérale par rapport à l'ouverture de déchargement 3 doit être telle qu'il puisse récupérer la totalité du produit déversé à travers l'ouverture de déchargement 3 dans cette position.

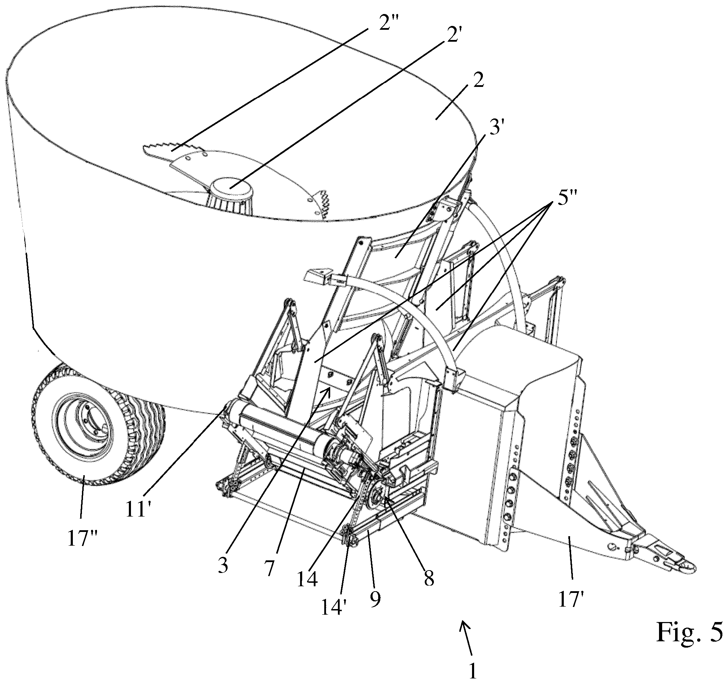

Dans la réalisation représentée sur les figures 5 et 6, la mélangeuse 1 est capable de distribuer le produit mélangé dans des auges surélevées uniquement du côté droit (vue selon la direction d'avance A) grâce au convoyeur 5 qui se déporte à droite et à la seconde partie 7 qui pivote vers le haut par rapport à la liaison pivot 8. Plus précisément, en termes constructifs, le convoyeur 5 peut comprendre un cadre support sur lequel sont montés les rouleaux 11, 11', 12 de support et de guidage de la bande transporteuse 5' et qui est divisé en deux parties 13 et 13', par exemple en forme de U chacune, définissant respectivement les première et seconde parties longitudinales 6 et 7 du convoyeur 5 et articulées entre elles par la liaison pivot 8, cette dernière reliant par exemple les extrémités aboutantes des branches en regard des parties en U entre elles. Ce cadre support est lui-même monté coulissant sur le châssis de la mélangeuse 1.

Afin de limiter les variations de longueur de la bande transporteuse 5 entre les différentes configurations possibles pour le convoyeur 5 (entièrement rectiligne et horizontal/partiellement horizontal et partiellement incliné), l'axe de rotation AR du rouleau tendeur et de renvoi 12 est préférentiellement situé en dessous de l'axe AP de la liaison pivot 8. L'axe de rotation AR est préférentiellement décalé en-dessous et du côté de la seconde partie longitudinal 7.

Le passage de la configuration rectiligne sans déport, correspondant à la position du convoyeur 5 à la position de transport, à la configuration inclinée se fait grâce à l'actionnement du moyen 10 de déplacement en coulissement transversal du convoyeur 5 qui va d'abord décaler transversalement les première et seconde parties longitudinales 6 et 7 jusqu'à ce que l'extrémité 14' des biellettes 14 arrive en butée dans le rail 9, puis pivoter la seconde partie longitudinale 7 vers le haut autour de l'axe AP de la liaison pivot 8.

Dans le mode de réalisation représenté, les moyens 9, 14 de déplacement en pivotement de la seconde partie 7 sont commandés de manière dépendante au moyen 10 de déplacement en coulissement transversal du convoyeur 5. Il est à noter que le coulissement transversal du convoyeur 5 est, dans cette construction, nécessaire pour que l'axe AR du rouleau tendeur 12 et l'axe AP de la liaison pivot 8 sortent de dessous la cuve 2 pour pouvoir incliner la seconde partie longitudinale 7.

Bien entendu, d'autres supports ou guides 15 (supérieures et inférieurs, rotatifs ou statiques) peuvent être prévus au niveau du convoyeur 5 pour le maintien de la bande transporteuse 5', surtout dans la région de la liaison pivot 8 (figure 4).

Le déplacement transversal du convoyeur 5 peut être réalisé par exemple par coulissement du cadre support 13, 13' sur des rails ou dans des glissières d'un châssis support monté transversalement sur le timon de la mélangeuse 1, ce sous l'action d'un vérin.

Le déplacement en rotation de la seconde partie 7, c'est-à-dire plus précisément de la partie de cadre support 13' correspondante, autour de la liaison pivot 8 peut être réalisé de différentes manières, en particulier selon d'autres variantes que celle représentée.

Le dispositif de déchargement 4 comprend de chaque côté latéral de la seconde partie longitudinale 7 du convoyeur 5, une biellette 14, fixée à pivotement par une première extrémité sur ladite seconde partie 7, ces deux biellettes étant de longueur variable par actionnement et présentant des secondes extrémités mobiles en translation selon une direction parallèle à l'axe longitudinal AL du convoyeur 5.

Selon une première variante de réalisation, non représentée, les secondes extrémités 14' des biellettes 14 sont montées coulissantes sur des rails ou dans des glissières s'étendant sous les côtés latéraux de la seconde partie longitudinale 7 du convoyeur 5, et parallèlement à ces côtés, par exemple par l'intermédiaire de patins.

Selon une seconde variante de réalisation, ressortant des figures, les secondes extrémités 14' des biellettes 14 sont fixées de manière articulée au niveau des extrémités libres de portions coulissantes de rails télescopiques 9 s'étendant sous les côtés latéraux de la seconde partie longitudinale 7 et parallèlement à ses côtés, lesdites portions de rails 9 étant déplaçables en translation par des actionneurs adaptés.

Afin de pouvoir régler l'amplitude du débattement de la seconde partie 7, et donc son inclinaison maximale possible, les biellettes 14 peuvent représenter chacune une structure télescopique permettant de régler, éventuellement par valeurs discrètes, la distance entre les deux extrémités de la biellette 14 considérée, c'est-à-dire sa longueur LB.

La seconde partie 7 inclinable peut être située, vue selon la direction d'avance A, du côté droit (variante représentée) ou du côté gauche (variante non représentée) de la première partie 6 non inclinable et déplaçable en translation transversalement à la direction d'avance A.

La longueur L1 est environ double de la longueur L2 (segmentation 1/3 - 2/3 du convoyeur 5).

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Mélangeuse, automotrice ou destinée à être attelée à un véhicule tracteur, comprenant une cuve de mélange (2) avec une ouverture de déchargement (3), et un dispositif (4) de déchargement qui est associé à l'ouverture de décharge (3) et qui est apte et destiné à transporter le produit mélangé sortant de l'ouverture de déchargement (3) et à le déposer au niveau d'une table d'alimentation située sur un côté latéral de ladite mélangeuse (1),
ledit dispositif de déchargement (4) comprenant un convoyeur (5) à bande transporteuse (5') arrangé transversalement par rapport à la direction d'avance (A) de la mélangeuse (1) et s'étendant au moins sous l'ouverture de déchargement (3) sur toute la largeur de cette dernière, et
ledit convoyeur (5) étant mobile transversalement à la direction d'avance (A) et constitué de deux parties (6 et 7), dans le sens de son extension longitudinale, à savoir une première partie (6) et une seconde partie (7), cette dernière étant reliée à la première partie (6) par une liaison pivot (8) et étant mobile entre plusieurs positions inclinées par rapport à ladite première partie (6), la seconde partie (7) étant dans sa position basse de pivotement coplanaire avec la première partie (6) et la longueur (L1) de la première partie longitudinale (6) du convoyeur (5) étant au moins égale à la largeur (L0) de l'ouverture de déchargement (3) de la cuve (2),
la longueur (L1) de la première partie (6) étant environ double de la longueur (L2) de la seconde partie (7) de telle manière que le convoyeur (5) présente une segmentation 1/3-2/3,
le dispositif de déchargement (4) comprenant, de chaque côté latéral de la seconde partie longitudinale (7) du convoyeur (5), une biellette (14), fixée à pivotement par une première extrémité sur ladite seconde partie (7) mélangeuse (1) comprenant
soit des premiers moyens (9, 14) de déplacement en pivotement de la seconde partie (7) et des seconds moyens (10) de déplacement en coulissement transversal du convoyeur (5), les premiers et seconds moyens étant mutuellement distincts, lesdits premiers moyens (9, 14) de déplacement en pivotement étant commandés de manière dépendante auxdits seconds moyens (10) de déplacement en coulissement transversal,
soit des premiers moyens (9, 14) de déplacement en pivotement de la seconde partie (7) et des seconds moyens (10) de déplacement en coulissement transversal du convoyeur (5), les premiers et seconds moyens étant mutuellement distincts, chacun desdits premiers et seconds moyens de déplacement comportant son propre organe actif ou actionneur,
mélangeuse dans laquelle:
la longueur (L2) de la seconde partie longitudinale (7) du convoyeur (5) est inférieure à la largeur (L0) de l'ouverture de déchargement (3) de la cuve (2),
la seconde partie longitudinale (7) s'étend au moins partiellement sous l'ouverture de déchargement (3) dans sa configuration rectiligne, c'est-à-dire non inclinée par rapport à la première partie (6) ou horizontale, et sans déport, et
les deux biellettes sont de longueur variable par actionnement et présentent des secondes extrémités mobiles en translation selon une direction parallèle à l'axe longitudinal (AL) du convoyeur (5).

2. Mélangeuse selon la revendication 1, dans laquelle la longueur totale (L) du convoyeur (5) est inférieure à la largeur (1) de la cuve de mélange (2).

3. Mélangeuse selon l'une quelconque des revendications 1 et 2, dans laquelle la longueur totale (L) du convoyeur (5) est supérieure à la distance (D) entre chacun des bords latéraux de l'ouverture de déchargement (3) et le coté latéral extérieur opposé de la cuve (2).

4. Mélangeuse selon l'une quelconque des revendications 1 à 3, dans laquelle le convoyeur (5) comprend trois rouleaux (11, 11', 12) pour le support et la circulation guidée de sa bande transporteuse (5'), à savoir deux rouleaux d'extrémité (11 et 11'), dont au moins l'un est entrainé ou motorisé, et un rouleau intermédiaire (12), tendeur et de renvoi, situé au niveau de la liaison pivot (8) et en appui sous pression sur la portion inférieure de retour de ladite bande transporteuse (5').

5. Mélangeuse selon l'une quelconque des revendications 1 à 4, dans laquelle le convoyeur (5) comprend un cadre support sur lequel sont montés les rouleaux (11, 11', 12) de support et de guidage de la bande transporteuse (5') et qui est divisé en deux parties (13 et 13'), par exemple en forme de U chacune, définissant respectivement les première et seconde parties longitudinales (6 et 7) du convoyeur (5) et articulées entre elles par la liaison pivot (8), reliant par exemple les extrémités aboutantes des branches en regard des parties en U entre elles.

6. Mélangeuse selon les revendications 4 et 5, dans laquelle l'axe de rotation (AR) du rouleau tendeur et de renvoi (12) est situé en dessous de l'axe (AP) de la liaison pivot (8) en étant préférentiellement décalé en dessous et du côté de la seconde partie longitudinale (7).

7. Mélangeuse selon la revendication 1, dans laquelle les biellettes (14) présentent chacune une structure télescopique permettant de régler, éventuellement par valeurs discrètes, la distance entre les deux extrémités de la biellette (14) considérée, c'est-à-dire sa longueur (LB).

8. Mélangeuse selon l'une quelconque des revendications 1 à 7, dans laquelle dans le cas où les premiers et seconds moyens comportent chacun son propre organe actif ou actionneur, les moyens (9, 14) de déplacement en pivotement, de manière continue, de la seconde partie (7) sont commandés indépendamment des moyens (10) de déplacement en coulissement transversal du convoyeur (5).

9. Mélangeuse selon l'une quelconque des revendications 1 à 7, dans laquelle les moyens (9, 14) de déplacement en pivotement, de manière continue, de la seconde partie (7) et les moyens (10) de déplacement en coulissement du convoyeur (5) sont commandés de manière au moins partiellement interdépendante, en particulier avec une commande conditionnelle ou subordonnée des moyens (9, 14) de déplacement en pivotement.

10. Mélangeuse selon la revendication 1, dans laquelle la longueur (L1) de la première partie longitudinale (6) du convoyeur (5) est au moins légèrement supérieure à la largeur (L0) de l'ouverture de déchargement (3) de la cuve (2).

## Patentansprüche

1. Mischwagen, der selbstfahrend oder zur Kupplung an ein Zugfahrzeug bestimmt ist, mit einem Mischbehälter (2) mit einer Entladeöffnung (3) und einer Entladevorrichtung (4), die mit der Entladeöffnung (3) verbunden ist und die geeignet und dazu bestimmt ist, das aus der Entladeöffnung (3) austretende Mischprodukt zu befördern und es an einem Futterplatz abzulegen, der sich an einer seitlichen Seite des Mischwagens (1) befindet, wobei die Entladevorrichtung (4) eine Fördereinrichtung (5) mit Förderband (5') umfasst, die quer zur Vorschubrichtung (A) des Mischwagens (1) angeordnet ist und sich zumindest unterhalb der Entladeöffnung (3) über deren gesamte Breite erstreckt, und
wobei die Fördereinrichtung (5) quer zur Vorschubrichtung (A) beweglich ist und in Richtung ihrer Längsausdehnung aus zwei Abschnitten (6 und 7) besteht, nämlich einem ersten Abschnitt (6) und einem zweiten Abschnitt (7), wobei Letzterer mit dem ersten Abschnitt (6) durch ein Drehgelenk (8) verbunden ist und zwischen mehreren geneigten Positionen in Bezug auf den ersten Abschnitt (6) beweglich ist, wobei sich der zweite Abschnitt (7) in seiner unteren, mit dem ersten Abschnitt (6) koplanaren Schwenkposition befindet und die Länge (L1) des ersten Längsabschnitts (6) der Fördereinrichtung (5) mindestens gleich der Breite (L0) der Entladeöffnung (3) des Behälters (2) ist,
wobei die Länge (L1) des ersten Abschnitts (6) ungefähr doppelt so lang ist wie die Länge (L2) des zweiten Abschnitts (7), so dass die Fördereinrichtung (5) eine 1/3-2/3-Segmentierung aufweist,
wobei die Entladevorrichtung (4) auf jeder seitlichen Seite des zweiten Längsabschnitts (7) der Fördereinrichtung (5) eine Schubstange (14) umfasst, die mit einem ersten Ende schwenkbar an dem zweiten Abschnitt (7) befestigt ist,
wobei der Mischwagen (1) entweder erste Mittel (9, 14) zur Schwenkbewegung des zweiten Abschnitts (7) und zweite Mittel (10) zur Querverschiebung der Fördereinrichtung (5) umfasst, wobei die ersten und zweiten Mittel voneinander verschieden sind, wobei die ersten Mittel (9, 14) zur Schwenkbewegung abhängig von den zweiten Mitteln (10) zur Querverschiebung gesteuert werden,
oder erste Mittel (9, 14) zur Schwenkbewegung des zweiten Abschnitts (7) und zweite Mittel (10) zur Querverschiebung der Fördereinrichtung (5), wobei die ersten und zweiten Mittel voneinander verschieden sind, wobei jedes der ersten und zweiten Mittel zur Bewegung bzw. Verschiebung sein eigenes aktives Element oder Antriebselement umfasst, Mischwagen, wobei: die Länge (L2) des zweiten Längsabschnitts (7) der Fördereinrichtung (5) kleiner ist als die Breite (L0) der Entladeöffnung (3) des Behälters (2),
sich der zweite Längsabschnitt (7) zumindest teilweise unter der Entladeöffnung (3) in seiner geradlinigen Konfiguration erstreckt, d. h. nicht geneigt in Bezug auf den ersten Abschnitt (6) oder horizontal und ohne Versatz, und
die beiden Schubstangen durch Betätigung längenveränderlich sind und zweite Enden aufweisen, die in einer Richtung parallel zur Längsachse (AL) der Fördereinrichtung (5) translatorisch beweglich sind.

2. Mischwagen nach Anspruch 1, wobei die Gesamtlänge (L) der Fördereinrichtung (5) kleiner ist als die Breite (1) des Mischbehälters (2).

3. Mischwagen nach irgendeinem der Ansprüche 1 und 2, wobei die Gesamtlänge (L) der Fördereinrichtung (5) größer ist als der Abstand (D) zwischen jeder der Seitenkanten der Entladeöffnung (3) und der gegenüberliegenden äußeren seitlichen Seite des Behälters (2).

4. Mischwagen nach irgendeinem der Ansprüche 1 bis 3, wobei die Fördereinrichtung (5) drei Rollen (11, 11', 12) zum Tragen und zum geführten Umlauf ihres Förderbandes (5') umfasst, nämlich zwei Endrollen (11 und 11'), von denen mindestens eine angetrieben oder motorisiert ist, und eine Zwischen-, Spann- und Umlenkrolle (12), die sich auf Höhe des Drehgelenks (8) befindet und unter Druck auf dem unteren Rückführungsabschnitt des Förderbandes (5') aufliegt.

5. Mischwagen nach irgendeinem der Ansprüche 1 bis 4, wobei die Fördereinrichtung (5) ein Tragwerk umfasst, auf dem die Rollen (11, 11', 12) zum Tragen und Führen des Förderbandes (5') montiert sind und das in zwei Teile (13 und 13'), beispielsweise jeweils U-förmig, unterteilt ist, die jeweils den ersten und zweiten Längsabschnitt (6 und 7) der Fördereinrichtung (5) definieren und durch das Drehgelenk (8) aneinander angelenkt sind, das beispielsweise die aneinandergrenzenden Enden der Schenkel, die den U-förmigen Teilen gegenüberliegen, miteinander verbindet.

6. Mischwagen nach Anspruch 4 und 5, wobei die Drehachse (AR) der Spann- und Umlenkrolle (12) unterhalb der Achse (AP) des Drehgelenks (8) liegt, indem sie vorzugsweise unterhalb und seitlich des zweiten Längsabschnitts (7) versetzt ist.

7. Mischwagen nach Anspruch 1, wobei die Schubstangen (14) jeweils eine Teleskopstruktur aufweisen, die es ermöglicht, den Abstand zwischen den beiden Enden der betreffenden Schubstange (14), d. h. ihre Länge (LB), einzustellen, eventuell nach diskreten Werten.

8. Mischwagen nach irgendeinem der Ansprüche 1 bis 7, wobei, in dem Fall, dass die ersten und zweiten Mittel jeweils ihr eigenes aktives Element oder Antriebselement umfassen, die Mittel (9, 14) zur kontinuierlichen Schwenkbewegung des zweiten Abschnitts (7) unabhängig von den Mitteln (10) zur Querverschiebung der Fördereinrichtung (5) gesteuert werden.

9. Mischwagen nach irgendeinem der Ansprüche 1 bis 7, wobei die Mittel (9, 14) zur kontinuierlichen Schwenkbewegung des zweiten Abschnitts (7) und die Mittel (10) zur Verschiebung der Fördereinrichtung (5) zumindest teilweise voneinander abhängig gesteuert werden, insbesondere mit einer bedingten oder untergeordneten Steuerung der Mittel (9, 14) zur Schwenkbewegung.

10. Mischwagen nach Anspruch 1, wobei die Länge (L1) des ersten Längsabschnitts (6) der Fördereinrichtung (5) zumindest etwas größer ist als die Breite (L0) der Entladeöffnung (3) des Behälters (2).

## Claims

1. Mixer wagon, either self-propelled or intended to be hitched to a tractor vehicle, comprising a mixing tank (2) with a discharge opening (3), and a discharge device (4) which is associated with the discharge opening (3) and which is able and intended to convey the mixed product leaving the discharge opening (3) and to deposit it on a feeding area located on a lateral side of the said mixer wagon (1),
the said discharge device (4) comprising a belt (5') conveyor (5) arranged transversally relative to the direction of advance (A) of the mixer wagon (1) and extending at least under the discharge opening (3) over its entire width, and
the said conveyor (5) being movable transversally with respect to the direction of advance (A) and made up of two portions (6 and 7), in the direction of its longitudinal extension, i.e. a first portion (6) and a second portion (7), the latter being connected to the first portion (6) by a pivot connection (8) and being movable between several positions inclined with respect to the said first portion (6), the second portion (7) being in its lower pivoting position coplanar with the first portion (6) and the length (L 1) of the first longitudinal portion (6) of the conveyor (5) being at least equal to the width (L0) of the discharge opening (3) of the tank (2),
the length (L1) of the first portion (6) being approximately twice the length (L2) of the second portion (7), so that the conveyor (5) has a 1/3-2/3 segmentation,
the discharge device (4) comprising, on each lateral side of the second longitudinal portion (7) of the conveyor (5), a tie rod (14), pivotally fixed by a first end to the said second portion (7),
mixer wagon (1) comprising either first pivoting movement means (9, 14) for pivoting the second portion (7) and second transverse sliding movement means (10) for transversally sliding the conveyor (5), the first and second means being mutually separate, the said first pivoting movement means (9, 14) being controlled dependently upon the said second transverse sliding movement means (10),
or first pivoting movement means (9, 14) for pivoting the second portion (7) and second transverse sliding movement means (10) for transversally sliding the conveyor (5), the first and second means being mutually separate, each of the said first and second movement means comprising its own active element or actuators,
mixer wagon wherein: the length (L2) of the second longitudinal portion (7) of the conveyor (5) is less than the width (L0) of the discharge opening (3) of the tank (2),
the second longitudinal portion (7) extends at least partially under the discharge opening (3) in its rectilinear configuration, i.e. not inclined with respect to the first portion (6) or horizontal, and with no offset, and
the two tie rods are of length that is variable by actuation and have second ends that can be moved in translation in a direction parallel to the longitudinal axis (AL) of the conveyor (5).

2. Mixer wagon according to claim 1, wherein the total length (L) of the conveyor (5) is less than the width (1) of the mixing tank (2).

3. Mixer wagon according to any one of claims 1 and 2, wherein the total length (L) of the conveyor (5) is greater than the distance (D) between each of the side edges of the discharge opening (3) and the opposite outer side of the tank (2).

4. Mixer wagon according to any one of claims 1 to 3, wherein the conveyor (5) comprises three rollers (11, 11', 12) for the support and guided circulation of its conveyor belt (5'), i.e. two end rollers (11 and 11'), at least one of which is driven or motorized, and an intermediate tensioning and deflecting roller (12), located at the pivot connection (8) and resting under pressure on the lower return section of the said conveyor belt (5').

5. Mixer wagon according to any one of claims 1 to 4, wherein the conveyor (5) comprises a frame on which the rollers (11, 11', 12) supporting and guiding the conveyor belt (5') are mounted, and which is divided into two portions (13 and 13'), each being U-shaped for example, respectively defining the first and second longitudinal portions (6 and 7) of the conveyor (5), and articulated to one another by the pivot connection (8), connecting together, for example, the abutting ends of the legs opposite the U-shaped portions.

6. Mixer wagon according to claims 4 and 5, wherein the rotation axis (AR) of the tensioning and deflecting roller (12) is located below the axis (AP) of the pivot connection (8) preferably being offset beneath and to the side of the second longitudinal portion (7).

7. Mixer wagon according to claim 1, wherein the tie rods (14) each have a telescopic structure making it possible to adjust, possibly by discrete values, the distance between the two ends of the tie rod (14) considered, i.e. its length (LB).

8. Mixer wagon according to any one of claims 1 to 7, wherein, if the first and second means each have their own active element or actuator, the pivoting movement means (9, 14) for continuously pivoting the second portion (7) are controlled independently of the transverse sliding movement means (10) for transversally sliding the conveyor (5).

9. Mixer wagon according to any one of claims 1 to 7, wherein the pivoting movement means (9, 14) for continuously pivoting the second portion (7) and the sliding movement means (10) for sliding the conveyor (5) are controlled at least partially interdependently, in particular with a conditional or subordinate control of the pivoting movement means (9, 14).

10. Mixer wagon according to claim 1, wherein the length (L1) of the first longitudinal portion (6) of the conveyor (5) is at least slightly greater than the width (L0) of the discharge opening (3) of the tank (2).
